# EUROPEAN PATENT SPECIFICATION

(11) **EP 1 018 533 B1**
(45) Date of publication and mention of the grant of the patent: **07.12.2005**
(21) Application number: 00300084.1
(22) Date of filing: 07.01.2000
(51) Int. Cl.: C08L 23/00, C08L 83/04, C08L 83/14

(54) **Silicone-containing low surface tension film**
Polysiloxan-enthaltender Film mit niedriger Oberflächenspannung
Film de polysiloxane à faible tension superficielle

(30) Priority: 08.01.1999 US 227737; 20.08.1999 US 378370
(43) Date of publication of application: 12.07.2000
(73) Proprietor: E.I. DU PONT DE NEMOURS AND COMPANY, Wilmington, DE 19898 (US)
(72) Inventor: Farkas, Nicholas A., Kingston, Ontario K7P 1C2 (CA); Leboeuf, Christian, Kingston, Ontario K7M 3N7 (CA)
(74) Representative: Carpmaels & Ransford

(56) References cited:
- EP-A- 0 484 093
- WO-A-98/10724
- US-A- 5 169 900

## Description

### FIELD OF THE INVENTION

The present invention relates to resins for films or coatings having release or peelability characteristics and modified surface tension properties, which makes them suitable for use in release films such as those used to protect adhesive films.

A further aspect of the present invention relates to a multi-layer film comprising release films formed from polyolefin, specific polysiloxanes and a vinyl silane as a layer and a polyolefin forming another layer. The release film of this invention can also be adhered to or coated onto a subweb of paper, aluminum, plastics such as nylon and polyester, or other subwebs suitable for coating.

### BACKGROUND OF THE INVENTION

Films containing a polyolefin, a polysiloxane, an organo-peroxide agent and a vinyl silane are known from United States Patent Nos. 4,978,436 and 5,169,900. Such films are useful for their slip, release, peelability or related characteristics, making them suitable for use as peelable coatings on adhesive materials, as removable protective layers for substrates, and as slip layers used in high-speed coating and packaging apparatuses. These two patents suggest a nominal film thickness of 25 microns and a gauge uniformity for such films of 25 to 30 microns.

PCT International application number PCT/CA97/00665 published 19 March 1998 discloses resins and films made from (i) polyolefin, (ii) dimethyl polysiloxane having functional end-groups, (iii) vinyl silane compound, and (iv) ultra-high molecular weight silicone polymer optionally using (v) an organo-peroxide agent and (vi) an organo-metallic moisture curing agent A preferred formulation disclosed in that PCT International application is Bynel 47E534. The film is suitable for use in release films. In preferred embodiments, the dimethyl polysiloxane is of the formula: 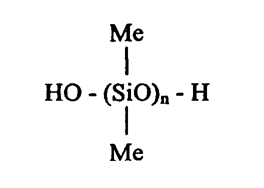 where Me = methyl and n is in the range of 200 to 2,300.

Low surface tension films are generally formed by coextrusion or extrusion coating onto an appropriate substrate, such as paper, plastic film, etc. Currently, the most widely used release coating in industry is a solvent-based cured silicon coating. The silicone migrates to the surface, is cured in place at the surface, where it acts as a release or slip agent.

In release applications, the low tension layer preferably should display the following characteristics:
a) acceptable release performance from the adhesive, that is, low to medium release force depending on the adhesive type and the application;
b) minimal silicon migration beyond the release coating/adhesive interface;
c) unchanging release properties over time;
d) for surface slip modification applications, the low tension layer should display unchanging coefficient of friction properties over time.

It is also useful in certain applications for the release layer to allow the adhesive layer to be peeled off with minimal noise being produced. One such application, for example, are pouches or outer wraps for feminine sanitary napkins, where it is desirable for the user to make minimal noise when opening the pouch. However, low release force does not necessarily result in low release noise.

The currently available solvent-based silicone coatings meet some of these criteria, but are more expensive than coatings made from coextrusion or extrusion since they require a 2-step process to make: the first step is to make the film and the second is to have it coated or cured.

It has now been found that silicone containing low surface tension resins and films can be made by coextrusion or extrusion coating using certain polysiloxanes that provide improved release properties from adhesives and good processability. Further, some of these release films have been found to significantly decrease the noise made when the adhesive layer is peeled off in applications where the adhesive is applied in the molten state.

### SUMMARY OF THE INVENTION

In one aspect of the present invention, there is provided a silicone-containing resin obtainable by admixing starting materials comprising:
a) a first polysiloxane consisting of:
   a branched diorganopolysiloxane of the general formula: 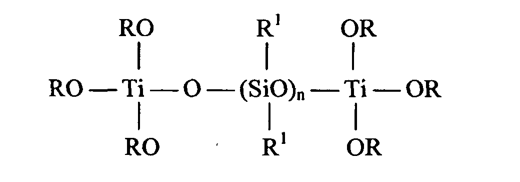
   where R is methyl, ethyl, isopropyl, butyl or mixtures thereof and R¹ is a hydrocarbon radical containing 1 to 30 carbon atoms, and
b) a polyolefin selected from (i) an unfunctionalized polyolefin homopolymer or copolymer of unsaturated hydrocarbons having 2-20 carbon atoms or mixtures thereof or from (ii) a functionalized polyolefin selected from a direct copolymer of ethylene and a polar monomer wherein the polar monomer is selected from the group consisting of vinyl silane, α,β-ethylenically-unsaturated C₃-C₈ carboxylic acids or ester thereof, and ethylenically unsaturated ester of a carboxylic acid or from (iii) an ionomeric copolymer or blends thereof selected from the group consisting of partially metal ion-neutralized direct copolymers of ethylene and acid containing monomers or from (iv) a polyolefin/graft monomer copolymer or blends of polyolefin/graft monomer copolymers, wherein the polyolefin is selected from the group consisting of polyethylene, polypropylene, ethylene propylene diene terpolymer and copolymers of ethylene with vinyl acetate, carbon monoxide, or ethylenically unsaturated carboxylic acids or esters thereof, and the graft monomers are selected from the group consisting of acrylic acid, methacrylic acid, maleic acid, fumaric acid, itaconic acid, crotonic acid, 5-norbornene 2,3-dicarboxylic acid, maleic anhydride, monosodium maleate, disodium maleate, itaconic anhydride, citraconic anhydride, monomethyl fumarate and monomethyl maleate, vinyl pyridines, vinyl silanes, 4-vinyl pyridine, vinyltriethoxysilane, hydroxy ethyl methacrylate, styrene and glycidyl methacrylate; or mixture of (i), (ii), (iii) or (iv), and
c) a second polysiloxane selected from the group consisting of:
   i) a dimethyl polysiloxane having functional end-groups selected from hydroxyl, amine, epoxy and methoxy groups,
   ii) the branched diorganopolysiloxane, and
   iii) mixtures thereof, and
d) a vinyl silane compound.

In a further aspect of the present invention, a process is provided for making a silicone containing low surface tension resin comprising the steps of:
a) making a first component by admixing in a first extruder a composition comprising:
   i) a first polysiloxane selected from a first group consisting of:
      a branched diorganopolysiloxane of the general formula: 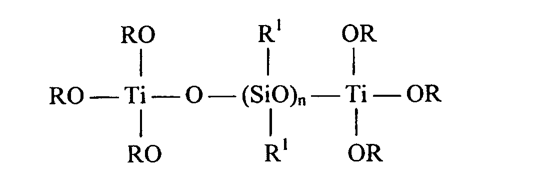
      where R is methyl, ethyl, isopropyl, butyl or mixtures thereof and R¹ is a hydrocarbon radical containing 1 to 30 carbon atoms, and
   ii) a polyolefin in molten state selected from (i) an unfunctionalized polyolefin homopolymer or copolymer of unsaturated hydrocarbons having 2-20 carbon atoms or mixtures thereof or from (ii) a functionalized polyolefin selected from a direct copolymer of ethylene and a polar monomer wherein the polar monomer is selected from the group consisting of vinyl silane, α,β-ethylenically-unsaturated C₃-C₈ carboxylic acids or ester thereof and ethylenically unsaturated ester of a carboxylic acid or from (iii) an ionomeric copolymer or blends thereof selected from the group consisting of partially metal ion-neutralized direct copolymers of ethylene with acid containing monomers or from (iv) a polyolefin/graft monomer copolymer or blends of polyolefin/graft monomer copolymers, wherein the polyolefin is selected from the group consisting of polyethylene, polypropylene, ethylene propylene diene terpolymer and copolymers of ethylene with vinyl acetate, carbon monoxide, or ethylenically unsaturated carboxylic acids or esters thereof, and the graft monomers are selected from the group consisting of acrylic acid, methacrylic acid, maleic acid, fumaric acid, itaconic acid, crotonic acid, 5-norbornene-2,3-dicarboxylic acid, maleic anhydride, monosodium maleate, disodium maleate, itaconic anhydride, citraconic anhydride, monomethyl fumarate and monomethyl maleate, vinyl pyridines, vinyl silanes, 4-vinyl pyridine, vinyltriethoxysilane, hydroxy ethyl methacrylate, styrene and glycidyl methacrylate; or mixture of (i), (ii), (iii) or (iv), and
b) making a second component by admixing in a second extruder a composition comprising:
   i) a polyolefin in molten state selected from (i) an unfunctionalized polyolefin homopolymer or copolymer of unsaturated hydrocarbons having 2-20 carbon atoms or mixtures thereof or from (ii) a functionalized polyolefin selected from a direct copolymer of ethylene and a polar monomer selected from the group consisting vinyl silane, α,β-ethylenically-unsaturated C₃-C₈ carboxylic acids or ester thereof, and ethylenically unsaturated ester of a carboxylic acid or from (iii) an ionomeric copolymer or blends thereof selected from the group consisting of partially metal ion-neutralized direct copolymers of ethylene with acid containing monomers or from (iv) a polyolefin/graft monomer copolymer or blends of polyolefin/graft monomer copolymers, wherein the polyolefin is selected from the group consisting of polyethylene, polypropylene, ethylene propylene diene terpolymer and copolymers of ethylene with vinyl acetate, carbon monoxide, or ethylenically unsaturated carboxylic acids or esters thereof, and the graft monomers are selected from the group consisting of acrylic acid, methacrylic acid, maleic acid, fumaric acid, itaconic acid, crotonic acid, 5-norbornene-2,3-dicarboxylic acid, maleic anhydride, monosodium maleate, disodium maleate, itaconic anhydride, citraconic anhydride, monomethyl fumarate and monomethyl maleate, vinyl pyridines, vinyl silanes, 4-vinyl pyridine, vinyltriethoxysilane, hydroxy ethyl methacrylate, styrene and glycidyl methacrylate; or mixture of (i), (ii), (iii) or (iv), and
   ii) a second polysiloxane selected from the group consisting of:
      1) a dimethyl polysiloxane having functional end-groups selected from hydroxyl, amine, epoxy and methoxy groups,
      2) the branched diorganopolysiloxane, and
      3) mixtures thereof, and
   iii) a vinyl silane compound, and
c) blending the first and second components together.

### DETAILED DESCRIPTION OF THE INVENTION

As used herein, the following terms have the meanings given below.

"Polyolefin", whether used in the substrate layer or the release layer of the film of the present invention, means homopolymers and copolymers of unsaturated hydrocarbons having 2-20 carbon atoms ("unfunctionalized") or as defined alternatively below ("functionalized"). They can be made by processes well known in the art, including metallocene processes. In particular, the polymers are homopolymers of ethylene or propylene or copolymers of ethylene with one or more alpha-olefin hydrocarbons having 3-10 carbon atoms, especially propylene, butene-1, hexene-1 and octene-1 and styrene. Suitable alpha-olefins also include dienes, that is, monomers with more than 1 site of unsaturation, especially 1,3 butadiene, 1,5 hexadiene and norbornadiene. In particularly preferred embodiments, the Polyolefins are copolymers of ethylene with a hydrocarbon alpha-olefin having from 4-8 carbon atoms and having a density in the range of about 0.850 to about 0.970 grams per cubic centimeter (g/cm³) and especially in the range of 0.920 to 0.930 g/cm³. Preferably, the polymers have a melt index (MI) in the range of 0.05 to 120 dg/min, especially 0.1 to 75 dg/min and in particular 1 to 15 dg/min. (as measured per ASTM D-1238, condition 3).

Mixtures and blends of the Polyolefins may be used. In general, the polymers are of the type that may be extruded in the form of film.

The Polyolefin may contain additives, for example antioxidants and other stabilizers, anti-block and slip agents. The Polyolefin may also contain fillers, e.g., talc, mica, calcium carbonate, and/or pigments such as titanium dioxide. In addition, the Polyolefin may contain modifying polymers, e.g., rubber-like modifying polymers such as ethylene/propylene/diene, styrene butadiene styrene, and other elastomers. It is to be understood that any additive must not cause undue adverse effects on the release and/or surface tension properties of the film.

In alternative embodiments, direct copolymers or blends of copolymers of ethylene and a polar monomer, e.g., an ethylene/vinyl silane copolymer or α,β-ethylenically-unsaturated C₃-C₈ carboxylic acid ("ethylene-acid copolymers"), or ester thereof, or an ethylenically unsaturated ester of a carboxylic acid may be employed as the Polyolefins or may be blended with the Polyolefins. By "direct copolymer", it is meant that the copolymer is made by polymerization of monomers together at the same time, as distinct from a "graft copolymer" where a monomer is attached or polymerized onto an existing polymer chain. Preparation of the direct ethylene-acid copolymers is described in United States Patent No. 4,351,931.

The ethylene-acid copolymers can be E/X/Y copolymers where E is ethylene; X is a modifying comonomer and Y is the α,β-ethylenically-unsaturated C₃-C₈ carboxylic acid, particularly acrylic or methacrylic acid, or ester thereof. Preferably, however, the ethylene-acid copolymer is a dipolymer (no modifying comonomer). The preferred acid moieties are methacrylic acid and acrylic acid. Suitable modifying comonomers (X) are selected from alkyl acrylate and alkyl methacrylate, the alkyl groups having from 1-12 carbons atoms, which, when present, may be up to 30 (preferably up to 25, most preferably up to 15) wt.% of the ethylene-acid copolymer. X may also be vinyl acetate or carbon monoxide.

A wide range of percent acid moiety in the ethylene-acid copolymer may be used. The acid moiety may be present in a range of about 1 to 30 weight percent of the acid copolymer, preferably in a range of about 5 to 25, alternatively about 10 to about 20. The ethylene-acid copolymers with high levels of acid are difficult to prepare in continuous polymerizers because of monomer-polymer phase separation. This difficulty can be avoided however by use of "cosolvent technology" as described in United States Patent No. 5,028,674, or by employing somewhat higher pressures than those at which copolymers with lower acid can be prepared.

Examples of such copolymers include ethylene/acrylic acid copolymers, ethylene/methacrylic acid copolymers, ethylene/itaconic acid copolymers, ethylene/alkyl acrylate copolymers and ethylene/alkyl methacrylate copolymers especially where the alkyl group is methyl, ethyl, propyl or butyl, ethylene/vinyl silane copolymers and ethylene/vinyl acetate copolymers.

Specific other copolymers include ethylene/alkyl acrylate/acrylic acid, ethylene/alkyl acrylate/methacrylic acid, ethylene/alkyl acrylate/maleic anhydride, and ethylene/alkyl methacrylate/maleic anhydride, wherein the alkyl group can have 1-10 carbon atoms, preferably n-butyl, iso butyl, or methyl, ethylene/vinyl acetate/methacrylic acid, ethylene/vinyl acetate/maleic anhydride, ethylene/vinyl acetate/carbon monoxide, ethylene/alkyl acrylate/carbon monoxide, ethylene/alkyl methacrylate/carbon monoxide, ethylene/carbon monoxide/acrylic acid, ethylene/vinyl tri-alkoxy silane, ethylene/vinyl acetate/tri-alkoxy silane, ethylene/alkyl acrylate/vinyl tri-alkoxy silane, ethylene/vinyl acetate/glycidyl methacrylate, ethylene/glycidyl methacrylate, ethylene/alkyl acrylate/glycidyl methacrylate and ethylene/alkyl methacrylate/glycidyl methacrylate where the alkyl or alkoxy group can have 1-10 carbon atoms.

In the alternate embodiments, ionomeric copolymers may be employed as the Polyolefins or may be blended therewith. These ionomers are derived from direct copolymers of ethylene with acid containing monomers and ethylene-acid copolymers by neutralization with metal ions. Methods of preparing such ionomers are well known and are described in United States Patent No. 3,264,262. The ethylene-acid copolymers are partially neutralized (15 to 75 percent) with metal cations, particularly monovalent and/or bivalent metal cations. Preferably about 25 to about 60 of the acid is neutralized. Preferred metal cations include lithium, sodium, and zinc, or a combination of such cations. Zinc is most preferred.

Further, graft copolymers or blends of graft copolymers of polyolefins may be used as the Polyolefin, either by themselves or blended with the Polyolefins, ethylene/polar-monomer direct copolymers, or ionomeric copolymers. These graft copolymers are made by means well known in the art with one or more graft monomers. The graft monomers can be selected from the group consisting of ethylenically unsaturated acidic monomers and their derivatives including acrylic acid, methacrylic acid, maleic acid, fumaric acid, itaconic acid, crotonic acid, 5-norbornene-2,3-dicarboxylic acid, maleic anhydride, monosodium maleate, disodium maleate, itaconic anhydride, citraconic anhydride, monomethyl fumarate and monomethyl maleate. Also, the graft monomers can be selected from ethylenically unsaturated monomers containing amino or hydroxy functional groups including vinyl pyridines, vinyl silanes, 4-vinyl pyridine, vinyltriethoxysilane, and hydroxy ethyl methacrylate. The graft monomers can also include styrene and glycidyl methacrylate. The grafting monomers, and mixtures thereof, can be present in the graft polymer in an amount of about 0.05 to about 5 weight percent. Preferred polyolefins for grafting include polyethylene, polypropylene, ethylene propylene diene terpolymer and copolymers of ethylene with vinyl acetate, carbon monoxide, or ethylenically unsaturated carboxylic acids or esters thereof.

"Dimethyl Polysiloxane" means a dimethyl polysiloxane having functional end groups. The preferred functional end group is a hydroxyl group. Such dimethyl polysiloxanes are commercially available, for example as silanol-terminated dimethyl polysiloxane from Hüls America Inc., U.S.A. under the trade name OHEB. However, dimethyl polysiloxanes having other terminal groups that are reactable with vinyl silanes, especially when grafted onto polyolefins, may be used, e.g., polysiloxanes with amine, epoxy, methoxy groups or the like. In addition, the Polysiloxane may be a moisture-crosslinkable polysiloxane, in which event the amount of vinyl silane used in the manufacture of the release film may be lowered. In preferred embodiments, the dimethyl polysiloxane is of the formula:

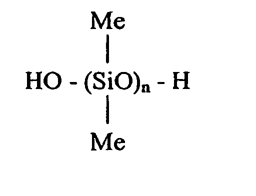

where Me = methyl and n is the range of 200 to 2,300
"Polysiloxane" refers to certain polysiloxanes having the following structures:
(1) a branched diorganopolysiloxane of the general formula: 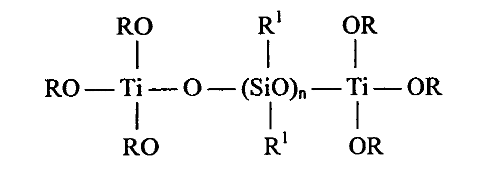
where R is methyl, ethyl, isopropyl, butyl or mixtures thereof and R¹ is a hydrocarbon radical containing 1 to 30 carbon atoms, preferably 1 to 18 carbon atoms, and more preferably R¹ is methyl, phenyl or mixtures thereof.
"Organic Peroxides", which serve as grafting agents in the present invention, are known in the art and include di-tertiary alkyl peroxides, especially dicumyl peroxide, which is available under the trade name LUPEROX® 500, and 2,5-dimethyl-2,5-di(t-butylperoxy) hexane, or Lupersol® 101. Other organic peroxides include acetylenic diperoxy compounds especially 2,5-dimethyl-2,5-di(t-butylperoxy) hexyne-3, which is available under the trade names LUPERSOL® 130. Other organic peroxides include peroxyesters, preferably t-amyl peroxypivalate and t-butyl peroxypivalate, peroxydicarbonates, preferably di-secbutyl)peroxydicarbonate, and acylperoxides, preferably dibenzoyl peroxide. The grafting agent serves to graft a portion of the vinyl silane onto the polyolefin. Absence of grated vinyl silane may adversely affect properties of the films, especially the processability of the compositions that form the films.

"Vinyl Silane Compounds" are known in the art and include vinyl trimethoxy silane, vinyl triethoxy silane, vinyl triacetoxy silane, trisbutanoxime vinyl silane, divinyl tetramethoxy disiloxane and hexamethyl bisdimethylaminoxy cyclotetrasiloxane. Mixtures of such silanes may be used.

It will be appreciated by one of skill in the art that in the event that the polyolefin used to form release layer (b) is a polyolefin/vinyl silane copolymer, the admixture of additional vinyl silane compound is not required. The process for preparing release layer (b) in this case would include the combination of components in an extruder in any of the ways described in detail above, with the exception that no vinyl silane compound would be fed to the extruder. It should be noted in this regard that the addition of too much vinyl silane can lead to excessive cross-linking of the copolymer, which may adversely affect the formation of thin films in accordance with the present invention. Accordingly, the total amount of vinyl silane used in the preparation of release layer (b), i.e. the amount added via vinyl silane copolymer and the amount added via vinyl silane monomer, should not be excessive. In particular, this amount should not exceed an amount of about 2% by weight and preferably, an amount of about 1% by weight of the total weight of the polymer formulation.

"Organo-metallic Moisture Curing Agents" are known in the art, and for use in the present invention, will typically be organo-tin or organo-titanium compounds. The preferred cross-linking agent is dibutyl tin dilaurate.

Compositions containing vinyl silane, organic peroxide and cross-linking agent are available under the trade name SILFIN®6, which is believed to contain vinyl trimethoxy silane, dicumyl peroxide and dibutyl tin dilaurate.

"Ultra-high molecular weight silcone polymer" means an ultra high molecular weight silicone polymer with a number average molecular weight range from about 350,000 to 1 million. Ultra-high molecular weight silcone polymer suitable for use in the present invention may be non-reactive, that is, comprise no functionalities. Alternatively, the ultra-high molecular weight silcone polymer may be reactive, comprising functionalities, for example, hydroxy ends. The Ultra-high molecular weight silcone polymer preferably has a viscosity in the range of about 10 million to about 50 million centistokes. It may preferably be used in the form of a masterbatch in a polyolefin carrier resin, typically about 25 to about 50 weight % Ultra-high molecular weight silcone polymer in a suitable polyolefin carrier resin such as LDPE or PP. Alternatively, the Ultra-high molecular weight silcone polymer may be made "in situ" by crosslinking vinyl silane with Polysiloxane.

"Tie Layer" means an extrudable adhesive layer well known in the art selected for its capability to bond a core layer to outer layers. Examples of such adhesive, tie layer polymer are based on either polyethylene or ethylene vinyl acetate copolymers. Ethylene-based and propylene-based homopolymers and copolymers, modified to enhance adhesion, are marketed by E.I. du Pont de Nemours and Company under the tradename, BYNEL®. They are typically modified with carboxyl groups such as anhydride.

The term "substantially uniform in thickness" means that the silicone containing film layer has uniform or substantially uniform thickness across the surface area of the film. It also means that the thickness variation is not more than plus or minus 10% and preferably is not more than plus or minus 5% across a given unit surface area.

The term "reduced migration of silicone" means that a silicone containing reagent or agent capable of migrating to an adhesive layer in contact therewith occurs to a lesser degree so that the adhesive layer which is contacted with a release film of the invention retains its adhesive properties without a diminishment in such properties because of the migration of silicone present in an adjacent layer.

The term "functionalized polyolefin" means that the polymer or copolymer is capable of directly reacting with a dimethylpolysiloxane having functional end groups to form a polymer chain with a dimethylpolysiloxane directly bonded thereto without an intervening vinyl silane moiety. The reaction can occur at a functional group on the polymer chain such as carboxyl group on an ethylene acrylic acid or methacrylic acid copolymer or onto the silicone moiety on an ethylene vinyl silane copolymer.

In one aspect of the present invention, the silicone-containing low surface tension resin or film is made from starting materials comprising:
a) a first polysiloxane consisting of:
   1) the branched diorganopolysiloxane, and
b) a polyolefin selected from (i) an unfunctionalized polyolefin homopolymer or copolymer of unsaturated hydrocarbons having 2-20 carbon atoms or mixtures thereof or from (ii) a functionalized polyolefin selected from a direct copolymer of ethylene and a polar monomer as defined herein or from (iii) an ionomeric copolymer or blends hereof as defined herein or from (iv) a graft copolymer or blends of graft copolymer as defined herein or mixture of (i), (ii), (iii) or (iv), and
c) a second polysiloxane selected from a second group consisting of:
   i) a dimethyl polysiloxane having functional end-groups, preferably of the formula:

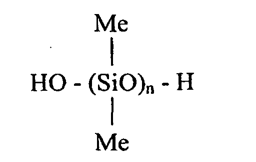

      where Me = methyl and n is in the range of 200 to 2,300, and
   ii) the branched diorganopolysiloxane, and
   iii) mixtures thereof, and
d) a vinyl silane compound, preferably one selected from the group consisting of vinyl trimethoxy silane, vinyl triethoxy silane, vinyl triacetoxy silane, trisbutanoxime vinyl silane, divinyl tetramethoxy disiloxane, and hexamethyl bisdimethylaminoxy cyclotetrasiloxane and mixtures thereof.
e) optionally, an organic peroxide grafting agent, preferably one selected from the group consisting of di-tertiary alkyl peroxides, especially dicumyl peroxide and 2,5-dimethyl-2,5-di(t-butylperoxy) hexane; acetylenic diperoxy compounds, especially 2,5-dimethyl-2,5-di(t-butylperoxy) hexyne-3; peroxyesters, especially t-amyl peroxypivalate and t-butyl peroxypivalate; peroxydicarbonates, especially di(sec-butyl) peroxydicarbonate; and acylperoxides, especially dibenzoyl peroxide to graft a portion of the vinyl silane onto the polyolefin, and
f) optionally, an organo-metallic moisture curing agent, preferably an organo-tin compound, more preferably dibutyl tin dilaurate, or an organo-titanium compound.

In preferred embodiments, the silicone-containing low surface tension resin or film of the present invention is made of starting materials comprising:
a) 1.0 % wt. to 9.0 % wt. of silicone-containing compounds in the first polysiloxane group;
b) 0.24 % wt. to 4.8 % wt. of silicone-containing compounds in the second polysiloxane group;
c) 0.01 % wt. to 1.0 % wt. of the vinyl silane compound;
d) optionally, 1 to 400 parts per million of an organic peroxide grafting agent,
e) optionally, 1 to 500 parts per million of an organo-metallic moisture curing agent, and
f) optionally, 0.01 % wt. to 2.5 % wt. of an ultra-high molecular weight silicone polymer, and
g) the remainder being the polyolefin.

Preferably, the amount of organic peroxide is sufficiently low that not all of the vinyl silane compound grafts to the polyolefin under grafting conditions. Expressed in an alternative way, conditions (i.e. process parameters and feed rates) are chosen such that only a portion of the vinyl silane is grafted to the polyolefin leaving some free vinyl silane after grafting.

Polyolefins used preferably are copolymers of ethylene with a hydrocarbon alpha-olefin having from 4-8 carbon atoms and having a density in the range of 0.850 to 9.70 grams per cubic centimeter (g/cm³) and especially in the range of 0.920 to 0.930 g/cm³. Preferably, the polymers have a melt index (MI) in the range of 0.05 to 120 dg/min, especially 0.1 to 75 dg/min and in particular in the range of 1 to 15 dg/min. (as measured per ASTM D-1238, condition E).

In yet a further aspect of the present invention, a silicone-containing film is provided comprising a resin of the present invention. Where the silicone-containing resin comprises the branched diorganopolysiloxaneas the first polysiloxane, the resin is useful as a release film for mild adhesives.

By "mild adhesive", it is meant an adhesive having relatively low adhesion to stainless steel and having a relatively low number of functional groups (reactive groups) in the adhesive. Examples of mild adhesives are those used in sanitary napkins. These silicone-containing films are, therefore, useful in making the release layer in an outer pouch for sanitary napkins, and preferably the films are surface treated by corona discharge.

In yet a further aspect of the present invention, a multi-layer structure is provided which comprises a subweb as layer (a) and the silicone-containing low surface tension film of this invention as layer (b) placed on the subweb. Layer (a) will typically have a thickness of 10 to 250 microns (micrometers), preferably from 15 to 150 microns, and most preferably from 15 to125 microns. Layer (b) will typically have a thickness of 1 to 25 microns, preferably from 1 to 6 microns, and most preferably from 1 to 4 microns.

Substrate layer (a), the subweb, may be any subweb known in the art suitable for extrusion or co-extrusion coating or being laminated to the silicone-containing polymer of release layer (b) or being simultaneously co-extruded with release layer (b). In particular, the subweb may be paper, particularly kraft paper, non-wovens, metal foil such as steel or aluminium, plastics such as nylon and polyesters particularly polyethylene terephthalate, or other subwebs suitable for coating. Preferably, the subweb is a Polyolefin, particularly the same Polyolefin used in the film of layer (b). The multi-layer film wherein the subweb is Polyolefin can be used as a pouch or outer wrap for feminine sanitary napkins or hygiene pads, baby diapers and incontinence products. The release film of the present invention may further be contacted with a first layer having an adhesive layer thereon to form a multilayer structure comprising a first layer of olefinic or non-olefinic material; an adhesive layer thereon; and a release film layer having the silicone containing compositions of the invention. The olefinic or non-olefinic materials can be selected from, for example, those materials described above for the subweb and can also include biaxial polyester or polypropylene. Pressure sensitive adhesives are selected from those normally found on, for example, sticky tape and labels.

The silicone-containing low surface tension film of the present invention preferably is surface treated, preferably by a corona discharge, when the first polysiloxane is the branched diorganopolysiloxane.
The corona discharge is applied after formation of the film, preferably shortly after formation of the film, e.g., prior to the film being wound up, and prior to the film being subjected to significant amounts of moisture. In preferred embodiments, the corona discharge is formed between two elongated electrodes, using techniques that are known to those skilled in the art, at a sufficient level to improve the release properties of the film. The film is passed between the electrodes while the corona discharge is formed between the electrodes. Subjecting the silicone-containing polyolefin film to a corona discharge results in a release film having superior release characteristics compared with film that has not been so treated. The film may conveniently be treated at the speeds at which film is extruded from an extruder in the manufacture thereof. Other techniques for chemically activating the surface of the film, such as flame treatment and plasma discharge, may be used in place of corona discharge. Such techniques and the associated equipment are known to those skilled in the art.

The corona-discharge treated embodiments of the films of the present invention may be used in a variety of end-uses. For example, the film may be in the form of a film that is peelable from another substrate, examples of such applications being pouches or outer wraps for feminine sanitary napkins or hygiene pads, baby diapers and incontinence products. In such applications, particularly the pouches for feminine sanitary napkins, it is desirable that minimal noise is made when the adhesive substrate is peeled from the release substrate and substantially no adhesive remains on the release substrate. The corona-treated release films made from the branched diorganopolysiloxane as the first polysiloxane have been found to provide such minimal noise.

The release films of the present invention may be embossed, roughened or textured as is commonly known in the art after they are extruded onto a suitable substrate.

Processes for the manufacture of resins and films of the type described above are known, including blowing, casting and extruding. Optionally, the resins and films can be monaxially or biaxially oriented using methods known in the art to improve properties and reduce thickness. Multi-layer films preferably are made by coextrusion of a substrate layer (a) and release layer (b). In such coextrusions, using polyolefin as an example of layer (a), this first polyolefin is fed to one extruder to form layer (a), and a release resin of the present invention is fed in a suitable manner to a second extruder to form layer (b). The second extruder should be capable of forming a uniform mixture of such components and of extruding a uniform mixture in the form of a molten web so as to form a uniform film, which may be in the form of a sheet or a coating on layer (a). The process should be operated in the absence of excessive moisture prior to the extrusion of the composition from the extruder, to reduce premature cross-linking reactions of the vinyl silane.

In circumstances where the silicone-containing polyolefin will not effectively adhere to the substrate desired for layer (a), layer (b) may be coextruded with a tie layer between layer (a) and layer (b).

The components that form the layer (b) may be fed to the extruder in a number of ways. For instance, all components may be fed to the hopper of the extruder, using suitable carrier materials where appropriate, as is described in greater detail below. In alternative procedures, some of the components may be fed through the hopper of the extruder and the remainder fed directly into the extruder. For example, the polyolefin may be fed to the hopper and heated in the extruder until a molten condition. Subsequently, the remaining ingredients may be introduced into the extruder by means of suitable feed ports on the extruder. For instance, the remaining ingredients may be fed into a cavity transfer mixer located in the extruder after the barrel of the extruder containing the extruder screw and prior to the extrusion die or other orifice through which the polymer is extruded. Cavity transfer mixers are known and are used for admixing of two or more materials in an extruder immediately prior to extrusion. Alternatively, and as long as good processability and good release properties are maintained, the remaining ingredients may be introduced into the extruder through a gear pump, which is also known for the introduction of ingredients into an extruder. As a further example, a composition of polyolefin, the second polysiloxane, and vinyl silane compound, plus optionally organic peroxide grafting agent and organo-metallic moisture curing agent if used, may be melt-blended as one component in a twin-screw extruder, and allowed to age (cure) for a sufficient time (typically 1 to 2 weeks) prior to pellet (dry blending) or melt blending with a melt-blended composition of polyolefin and the first polysiloxane, as well as optionally with the ultra-high molecular weight silicone polymer, all of which in combination form the composition of layer (b) to be extruded. This final composition for layer (b) can be extruded using a single-screw extruder.

In addition, the aforementioned composition for forming layer (b) may be blended with any polyolefin compatible with polyolefin used to make layer (b), for example low density polyethylene (LDPE), without adversely effecting the properties of the resulting film. Such blending can range from 0.1 parts to 1.5 parts LDPE to 1 part layer (b) composition, depending on the desired end use performance. Other additives as defined above may also be added.

The preferred procedure for extruding a film according to the present invention is as follows. A first polyolefin (for substrate (a)) is coextruded or extrusion coated with a resin (release layer (b)) to make the final multi-layer structure. The resin composition for release layer (b) is made by admixing in a first extruder a composition comprising: a polysiloxane selected consisting of the branched diorganopolysiloxane, and a polyolefin in molten state selected from (i) an unfunctionalized polyolefin homopolymer or copolymer of unsaturated hydrocarbons having 2-20 carbon atoms or mixtures thereof or from (ii) a functionalized polyolefin selected from a direct copolymer of ethylene and a polar monomer as defined herein or from (iii) an ionomeric copolymer or blends thereof as defined herein or from (iv) a graft copolymer or blends of graft copolymers as defined herein or mixture of (i), (ii), (iii) or (iv). In a second extruder there is admixed a composition comprising: a polyolefin in molten state selected from (i) an unfunctionalized polyolefin homopolymer or copolymer of unsaturated hydrocarbons having 2-20 carbon atoms or mixtures thereof or from (ii) a functionalized polyolefin selected from a direct copolymer of ethylene and a polar monomer as defined herein or from (iii) an ionomeric copolymer or blends thereof as defined herein or from (iv) a graft copolymer or blends of graft copolymers as defined herein or mixture of (i), (ii), (iii) or (iv), and a dimethyl polysiloxane having functional end-groups as defined herein, or the branched diorganopolysiloxane, or mixtures thereof, and a vinyl silane compound. The products from the first and second extruders are then blended together to make the resin. Optionally, an organic peroxide grafting agent to graft a portion of the vinyl silane onto the polyolefin, and an organo-metallic moisture curing agent may be added in the second extruder.

If the components are fed in part directly into the extruder, e.g., using a cavity transfer mixer, then higher levels of, for example, dimethyl polysiloxane may be used at levels up to about 15%, which may be advantageous to the properties of the product that is obtained.

It will be appreciated by one of skill in the art that in the event that the polyolefin used to form release layer (b) is a polyolefin/vinyl silane copolymer, the admixture of additional vinyl silane compound is not required. The process for preparing layer (b) in this case would include the combination of components in an extruder in any of the ways described in detail above, with the exception that no vinyl silane compound would be fed to the extruder. It should be noted in this regard that the addition of too much vinyl silane can lead to excessive cross-linking of the copolymer, which may adversely affect the formation of thin films in accordance with the present invention. Accordingly, the total amount of vinyl silane used in the preparation of layer (b), i.e. the amount added via vinyl silane copolymer and the amount added via vinyl silane monomer, should not be excessive. In particular, this amount should not exceed an amount of about 2% by weight and preferably, an amount of about 1% by weight of the total weight of the polymer formulation.

From the above, it will be seen that the selection of the particular polysiloxane used in the resins and films of the present invention is dependent on the type of adhesive used. The table below summarizes these findings:

| **Application** | **Temperature of Adhesive as applied to release film** | **Release Formulation based on functionalized (reactive) silicone―the branched diorganopolysiloxane or the silanol-terminated branched diorganopolysiloxane** | |
|---|---|---|---|
| | | **Film not corona treated** | **Film corona treated** |
| Napkin Pouch Film Application (mild adhesive) | Room temperature | **X** | √ |
| | Molten | **X** | √ |
| Paper-coated label film application (aggressive adhesive) | Room temperature | **X** | **X** |
| | Molten | **X** | **X** |

| | | | |
|---|---|---|---|
| **X**: no good | | | |
| √: good | | | |

As is known to persons skilled in the art, other components may be added to the resins and films of the present invention, such as heat stabilizers, anti-oxidants, processing acids, anti-block (i.e. silica), colorants, various tougheners, tackifiers, rubber modifiers, slip additives, etc.

The preferred embodiments of the present invention are illustrated by the following nonlimiting examples.

### EXAMPLES

### EXAMPLE 1 (Comparative)

### Resin Compounding:

Film 2423-102 AH: this resin (the Bynel 47E534 as described in PCT International application PCT/CA97/00665) was compounded on a 96 mm Berstorff twin-screw extruder, 38:1 Length/Diameter (L/D) ratio, screw speed 300 rpm. Barrel temperatures set at 180°C for component (A) manufacture, and 190°C for component (B) manufacture. The screw used in the extruder was a compounding screw of sufficient shear-mixing capability (both distributive and dispersive mixing) as to uniformly disperse the silicone into the polyethylene. All the ingredients were added at, or just downstream of, the feed throat of the extruder.

Component (B) was made separate from component (A), component (B) was then aged for at least 2 weeks, then a salt and pepper (dry) blend of component (A) (36 % wt.) + component (B) (24 % wt) + 30% LLDPE + 10% EPA-25 was made. Note: EPA-25 is "Extrusion Process Aid 25" made by Dow Corning, and is a masterbatch of 25% of Ultra High Molecular Weight Silicone Polymer in LDPE resin.

Component (A): 93% wt. of LLDPE, 7% silicone (OHEB-1000 polydimethylsiloxane from Hüls).

Component (B): 95.4% wt. of LLDPE, 4.4% wt. OHEB-1000 silicone, 0.06% vinyltriethoxysilane, 0.04% Silfin 6 (Silfin 6 is made by Hüls and consists of 88.7% vinyltrimethoxy silane, 7.8% dicumyl peroxide and 3.5% dibutyl tin dilaurate).

Film 2423-102-C: this resin comprised 100% of a siliconized LDPE resin, called Lubotene® RLF 4003, supplied by Optatech in Finland.

### Film Casting:

The above two resins were then made into film on a semi-commercial cast coextrusion line. The total 2-layer coex film thickness was 30.5 microns (1.2 mils) thick, with the thinner siliconized release layer being about 2 microns thick. The extruder feeding the siliconized layer was a 8.9 cm (3.5 inch) diameter, 30:1 L/D, with barrel temperatures on the extruder of 204°C (400°F) and running at a minimum RPM of 6-7. Temperature was 215°C (420°F) at the combining block and 204°C (400°F) at the die. Die slot width was 152 cm (60 inches). Line speed = 65 mpm (214 fpm). The film was quenched on a high-gloss chrome chill roll set at 21 °C (70°F).

### Testing of Films:

### Room Temperature Test:

Room Temperature Peel: Using Always® Maxi pads (available from Procter & Gamble), peel the siliconized paper from the pads, and immediately apply the pads against the siliconized side of the siliconized release film of the invention. Place composite structure (up to three layers deep, each layer containing two pad/film composites) into a Dake press. Close the press and apply pressure until the gauge indicates 3175 kg (3.5 tons). Take the samples out of the press, and cut 2.5 cm by 15.2 cm (1" by 6") strips, in the middle of the pad, using a die cutter. Use an Instron machine, or a slip-peel tester, to do a 180 degree peel at a peel speed of 1270 mm/minute (50 inches/minute).

Re-adhesion: Immediately after each pad is stripped from the film, apply the pad to a stainless steel panel with two passes of a tape roller (2Kg or 4.5 lbs rubber-faced tape roller). Peel the pad off the stainless steel using the Instron machine or slip/peel tester, at a 180° angle and a speed of 1270 mm/minute (50 inches/minute).

### Elevated Temperature Test:

Take siliconized film, and lay out with release side up. Place Always® Maxi pad, adhesive side down, onto the film. Place Teflon sheets above and below composite structures. Each layer in the stack contains two composites. Place a 2.2 kg (51b) weight on the stack. Place stack in a preheated hot air oven, set a temperature of 110°C. Leave in oven for one hour. Pull out of oven, let cool, and cut a one-inch wide strip out of the middle of each composite with a die cutter. Peel the film from the pad on an Instron machine, or slip/peel tester, at a 180° angle, and a speed of 1270 mm/minute (50 inches/minute).

| **Film I.D.** | **Composition of release layer (2-layer coex)** | **Treatment Level, W/ft2/ minute** | **Room Temperature, (140 psi, 8 minutes, Rm. Temp.). Peel rate =50 inches/minute.** | | **After heating against Always® adhesive******* **(1 hour, 110°C, 5 lb weight). Peel rate= 50 inches/minute.** |
|---|---|---|---|---|---|
| | LST=Low Surface Tension | | **Release, g/in** | **Re-adhesion to Stainless Steel, g/in** | **Release, g/in** |
| 2423-102-AH | Bynel 47E534 --2 microns | 5.3 | 42 | 458 | 157 |
| 2423-102-CH | Lubotene® RLF 4003--2 microns | 5.3 | 28 | 425 | 303 |
| Paper-coated cured Silicone Coating | | N/A | 28 | 663 | 17 |

| | | | | | |
|---|---|---|---|---|---|
| * Adhesive as found on Always® sanitary napkins. | | | | | |

These examples show that the Lubotene® resin, when made into film at the same conditions as the Bynel 47E534, shows much poorer release than the Bynel 47E534 against heated adhesive. Since the release of Bynel 47E534 from hot adhesive is unacceptable, the Lubotene® would also be unacceptable in the end-use application (on sanitary napkins).

### EXAMPLE 2

### Resin Compounding:

Film 2497-01-1 was made from a fully compounded resin, Bynel 47E534. The conditions were the same as described for film 2423-102 AH (Example 1 above), except that components (A), (B), LLDPE and EPA-25 were melt compounded together in another step through the 96 mm Berstorff extruder.

Film 2497-01-9 was made from resins compounded on a 25 mm Berstorff twin-screw extruder, 38:1 L/D, at a screw speed of 300 rpm and barrel temperatures set at 200°C. The screw used in the extruder was a compounding screw of sufficient shear mixing capability (both dispersive and distributive mixing) as to uniformly disperse the silicone into the polyethylene. All the ingredients were added into, or just downstream of, the feed throat of the extruder.

The component (A) comprised 93% wt. of LLDPE resin, and 7% of the polysiloxane specified in the example.

Component (B) was the same formulation as component (B) in Example 1.

The final blend consisted of either a salt and pepper (dry) blend of 60% wt. of component (A) and 40% wt. of component (B), or a fully compounded melt blend of 60% wt. of component (A) and 40% wt. of component (B). For the fully compounded blend, the (A) and (B) components were processed through the 25 mm Berstorff extruder at the same conditions as outlined above.

### Film Casting:

The films were made on a cast coextrusion line. The extruder feeding the siliconized layer was a 16 mm (5/8") diameter vertical Randcastle single screw extruder, with a mixing screw. The barrel temperatures were set at 230°C, and the die was set at 240°C. The die is a Cloeren 20 cm (8-inch) wide coex flat film die. The line speed was about 7 mpm (23 fpm), and the film was quenched on a high-gloss chrome chill roll set at 60°C (140 deg F). The film thickness was 35 microns, with the thinner siliconized release layer being about 10 microns thick, and the thicker plain LLDPE layer being about 25 microns thick.

### Testing of Films:

The same test procedure was used as used in Example 1.

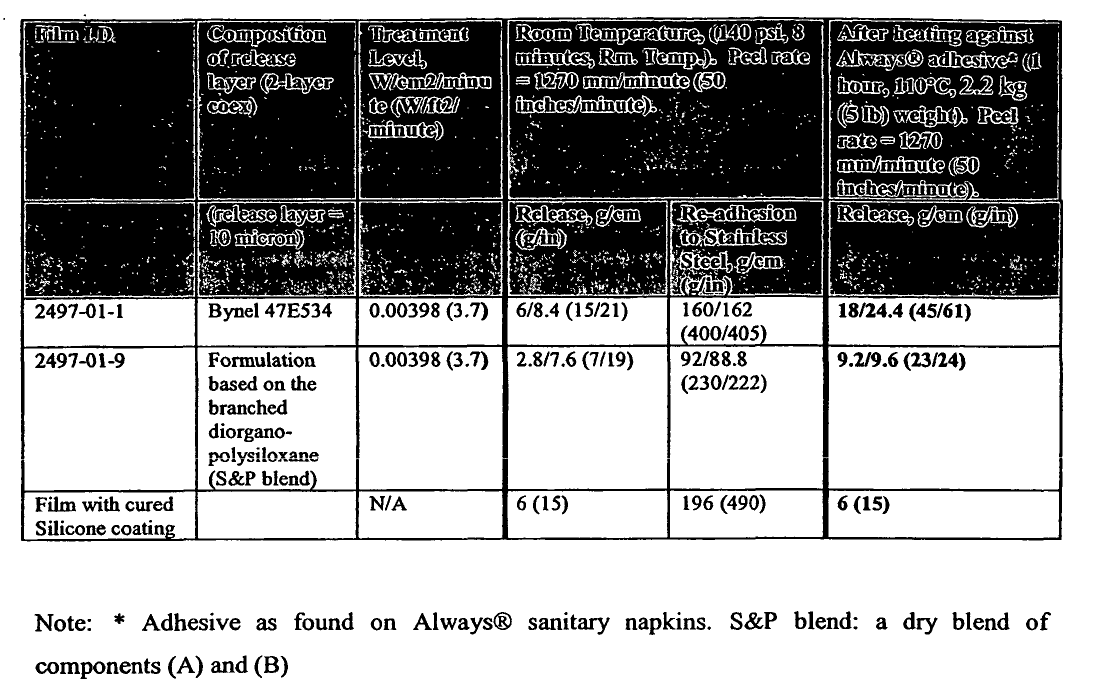

These examples show that the new silicone-containing low surface tension films of the present invention have resulted in films having significantly lower release from heated adhesive than the Bynel 47E534 formulation.

### EXAMPLE 3

The coefficient of friction for some of the films in Example 2 was measured. This test measures the slipperiness of the film surface, against either itself (film against film) or against a metal surface (film against metal). Static coefficient of friction refers to the force needed initiate the movement of the surfaces past each other, whereas kinetic coefficient of friction is the force needed to maintain the movement of the surfaces past each other. In this example, the method used to measure coefficient of friction is ASTM D-1894.

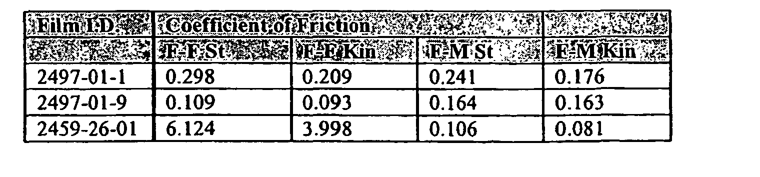

In this Example, "F-F St" refers to film on film static coefficient of friction, "F-F Kin" refers to film on film kinetic coefficient of friction, "F-M St" refers to film on metal static coefficient of friction, and "F-M Kin" refers to film on metal kinetic coefficient of friction. Film 2459-26-01 is a control film made from LLDPE having no silicone content and which was not corona treated.

### EXAMPLE 4

### Resin Compounding:

Film 2512-163-1: plain LLDPE resin was used.

Film 2512-163-2: resin was made from a fully compounded resin, Bynel 47E534. The conditions were the same as described for 2423-102 AH (Example 1 above), except that components (A), (B), LLDPE and EPA-25 were melt compounded together in another step through the 96 mm Berstorff extruder.

Films 2512-163-3 and -7: made from resins compounded on a 25 mm Berstorff twin-screw extruder, 38:1 L/D, at a screw speed of 300 rpm and barrel temperatures set at 200°C. The screw used in the extruder was a compounding screw of sufficient shear mixing capability (both dispersive and distributive mixing) as to uniformly disperse the silicon into the polyethylene. All the ingredients were added into, or just downstream of, the feed throat of the extruder.

Component (A) comprised 93% wt. off LLDPE resin, and 7% of the polysiloxane as specified in the example.

Component (B) was the same component (B) as in Example 1.

The final blend consisted of a fully compounded melt blend of 60% wt. of component (A) and 40% wt. of component (B). Components (A) and (B) were processed through the 25 mm Berstorff extruder at the same conditions as outlined above.

### Film Production:

The above resins were casted using a 19 mm (¾") diameter Killion single screw extruder, 30:1 L/D, attached to a 15 cm (6-inch) wide Killion slot die. The barrel temperatures were set to 220°C, and the film was quenched to a temperature of 60 °C (140°F). The films were monolayer (single layer) of about 102 microns (4 mils) thick.

### Film Testing:

Same test procedures as outlined for Example 1 were used.

| **Film I.D.** | **Composition of release layer (monolayer)** | **Treatment Level, Watts** | **Room Temperature, (140 pi, 8 minutes, Rm. Temp.). Peel rate =1270 mm/minute (50 inches/minute).** **Always® adhesive*** | | **After heating against Always® adhesive (1 hour, 110°C, 2.2 kg (5 lb) weight). Peel rate = 1270 mm/minute (50 inches/minute).** **Always® adhesive** |
|---|---|---|---|---|---|
| | Film is about 4 mils thick. | | **Release, g/cm (g/in)** | **Re-adhesion to Stainless Steel, g/cm (g/in)** | **Release, g/cm (g/in)** |
| 2512-163-1 | LLDPE | 200W | 73.2 (183) | 170.8 (427) | **>160 (>400)** |
| 2512-163-2 | Bynel 47E534 | 200 | 3.2 (8) | 97.6 (244) | **22.8 (57)** |

| | | | | | |
|---|---|---|---|---|---|
| * Adhesive as found on Always® sanitary napkins. | | | | | |

These examples show that certain polysiloxanes, which are the best candidates for release from aggressive, functionalized adhesive (tape or label adhesive), do not work well for milder, essentially non-functionalized adhesives (Always® adhesive). The Bynel 47E534 is much better both in terms of release (lower value) and re-adhesion (higher value).

### EXAMPLE 5

For films labeled 2497-01-1 and -9, please refer to Example 2 above.

This example shows that film 2497-01-9 needs to be corona treated to produce a film that will have good release from the mild adhesive found on Always® sanitary napkins after being heated as per the elevated temperature test described in Example 1. Thus, for mild adhesive, corona treatment provided better release for the formulations based on the branched diorganopolysiloxane and on the silanol-terminated branched diorganopolysiloxane.

| **Film I.D. (see above tables for details of films)** | **Composition of release layer** | **Treatment Level, Watts** | **After heating against Always® adhesive* (1 hour, 110°C, 2.2 kg (5 lb) weight). Peel rate = 1270 mm/minute (50 inches/minute).** |
|---|---|---|---|
| | | | **Release, g/cm (g/in)** |
| 2497-01-1 | Bynel 47E534 | None | **193.6 (484)** |
| 2497-01-1 | Bynel 47E534 | 200W | **13.6 (34)** |
| 2497-01-9 | Formulation based on the branched diorganopoly-siloxane (S&P blend) | None | **208 (520)** |

| | | | |
|---|---|---|---|
| * Adhesive as found on Always® sanitary napkins. | | | |

### EXAMPLE 6

For films labeled 2512-163-1 and please refer to Example 4 above. Film 2512-163-4 was made in the same way, but with the changes noted in the Table below.

Films were tested using the room temperature peel test as follows:

The adhesive side of a masking sheet supplied by JenCoat was peeled from its cured-silicone backing sheet, and was immediately applied to the siliconized side of the release films of the invention. The composite structure was placed into a Drake press, closed and pressure was applied to the equivalent of 140 psi for 8 minutes at room temperature. The samples were taken out of the press and were cut into 2.5 cm by 15.2 cm (1" by 6" strips). A slip/peel tester was used to perform a 180 degree peel at a speed of 30.5 cm/min (12"/min).

Re-Adhesion: Immediately after the completion of the peel test, the adhesive strip was removed completely from the release film and applied to a stainless steel panel with 2 passes of a tape roller (2 Kg or 4.5 lbs rubber-faced tape roller). The adhesive strip was then peeled from the stainless steel panel using the slip/peel tester, at a 180 degree peel angle and a speed of 30.5 cm/min (12"/min).

This example shows that the films with formulations based on these particular formulations should not be corona treated when used with aggressive adhesives. Good release properties are obtained from aggressive adhesives when the films are not corona treated.

| **Film I.D.** | **Description of Release Layer** | **Surface After- treatment** | **Release Test: 140 psi, 8 min, room Temp.- Peel rate 12 in/min Aggressive Adhesive** | |
|---|---|---|---|---|
| | | | **Release, g/in** | **Release After Readhesion to Steel (g/in)** |
| Control | Paper, cured silicon coating | None | 22 | Does not peel - cohesive failure of paper |
| 2512-163-1 | Nova 31E (LLDPE) | None | 390; on 3 replicates -cohesive failure of paper | N/A |
| 2512-163-2 | BYNEL 47E534 | None | "locked-up" cannot peel, value over 1000 | N/A |

From the above examples, it will be seen that the selection of the particular polysiloxane used in the films of the present invention is dependent on the type of adhesive used. The table below summarizes these findings:

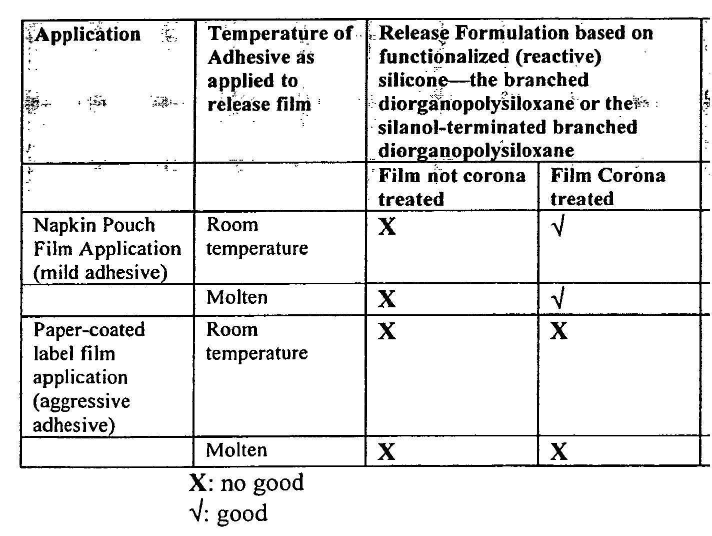

### EXAMPLE 7

Two compositions were made from the following starting materials:

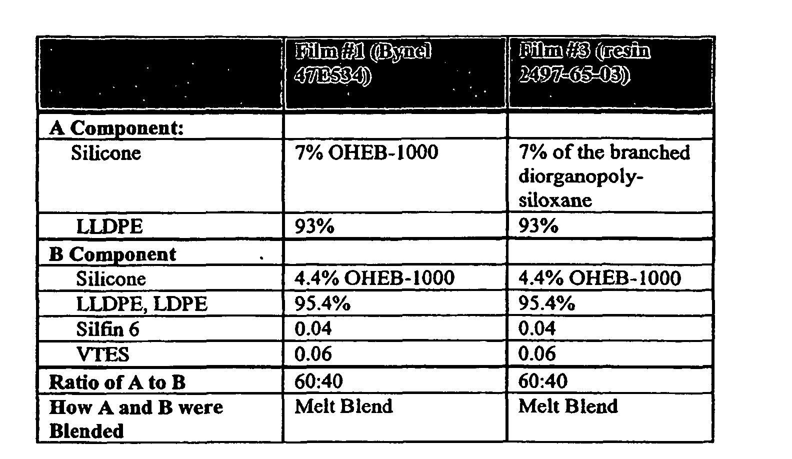

These resins were compounded on a 43 mm Berstorff twin-screw extruder, at a total throughput of 45.3 kg/hour (100 lbs/hour) and a screw RPM of 300. The barrel temperatures were at 200°C.

The release layers were co-extruded on a semi-commercial line as a 4-5 micron thick layer on a 30 micron thick polyolefin layer. The surface of the release layer was corona treated. These films were then processed on a semi-commercial sanitary napkin line, whereby:
- the coextruded release film was unwound, with the siliconized release surface against the hot melt gun;
- the molten adhesive was applied directly onto the siliconized release surface;
- the backsheet (outer layer of the napkin) was then nipped to the adhesive; and
- the backsheet, after a given period of time, was stripped off the release film, with the adhesive transferring completely to the backsheet.

The amount of glue applied, the line speed, nip pressures and glue temperatures were set to standard conditions, as is known to those skilled in the art.

The level of noise created from stripping off the backsheet was assessed by a panel of people using their ears. "Green peel" refers to the backsheet being stripped off after only a few hours, and "aged peel" refers to the backsheet being stripped off after several days.

| **Film I.D.** | **Green Peel (after 3-4 hours)******* | **Aged Peel (after 6 days)******** |
|---|---|---|
| Film #1 | 5.0 | 5.0 |
| Film #2 | 1.7 | 4.35 |
| Film #3 | 0.7 | 1.90 |
| Silicone coated paper | 0 | 3.50 |
| Silicone coated film | --- | 0 |

| | | |
|---|---|---|
| * Silicone coated paper arbitrarily given a value of 0, while Film #1 arbitrarily given a value of 5. Noise was evaluated by a panel of 4 people. | | |
| ** Silicone coated film arbitrarily given a value of 0, while Film #1 arbitrarily given a value of 5. Noise was evaluated by a different panel of 5 people. | | |

The peel conditions were as follows. 180 degree peel, along the long axis of the adhesive strip. Peel done manually, at a moderate speed.

This example shows that the films made in accordance with the present invention give quieter peels than that using Bynel 47E534. When the siliconized side of the release film was embossed, the noise level was reduced even more, almost to the level for silicone-coated film.

The new films of the present invention, therefore, overcome the deficiencies in the prior art by providing good release and lower noise off mild adhesives when the adhesive is applied to the release surface in a molten state, and then cooled, and good release off aggressive adhesives when the film is applied on solidified adhesives.

## Claims

1. A silicone-containing resin obtainable by admixing starting materials comprising:
a) a first polysiloxane consisting of:
a branched diorganopolysiloxane of the general formula: 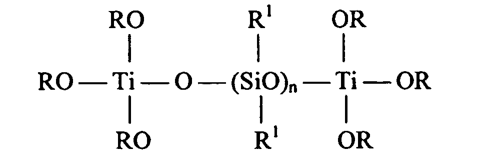
where R is methyl, ethyl, isopropyl, butyl or mixtures thereof and R¹ is a hydrocarbon radical containing 1 to 30 carbon atoms, and
b) a polyolefin selected from (i) an unfunctionalized polyolefin homopolymer or copolymer of unsaturated hydrocarbons having 2-20 carbon atoms or mixtures thereof or from (ii) a functionalized polyolefin selected from a direct copolymer of ethylene and a polar monomer wherein the polar monomer is selected from the group consisting of vinyl silane, α,β-ethylenically-unsaturated C₃-C₈ carboxylic acids or ester thereof, and ethylenically unsaturated ester of a carboxylic acid or from (iii) an ionomeric copolymer or blends thereof selected from the group consisting of partially metal ion-neutralized direct copolymers of ethylene with acid containing monomers or from (iv) a polyolefin/graft monomer copolymer or blends of polyolefin/graft monomer copolymers, wherein the polyolefin is selected from the group consisting of polyethylene, polypropylene, ethylene propylene diene terpolymer and copolymers of ethylene with vinyl acetate, carbon monoxide, or ethylenically unsaturated carboxylic acids or esters thereof, and the graft monomers are selected from the group consisting of acrylic acid, methacrylic acid, maleic acid, fumaric acid, itaconic acid, crotonic acid, 5-norbornene-2,3-dicarboxylic acid, maleic anhydride, monosodium maleate, disodium maleate, itaconic anhydride, citraconic anhydride, monomethyl fumarate and monomethyl maleate, vinyl pyridines, vinyl silanes, 4-vinyl pyridine, vinyltriethoxysilane, hydroxy ethyl methacrylate, styrene and glycidyl methacrylate; or mixture of (i), (ii), (iii) or (iv), and
c) a second polysiloxane selected from the group consisting of:
i) a dimethyl polysiloxane having functional end-groups selected from hydroxyl, amine, epoxy and methoxy groups,
ii) the branched diorganopolysiloxane, and
iii) mixtures thereof, and
d) a vinyl silane compound.

2. The resin of claim 1, wherein:
a) the dimethyl polysiloxane has the formula, 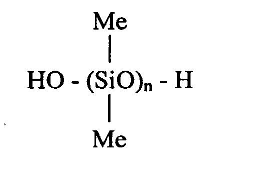
where Me = methyl and n is the range of 200 to 2,300, and
b) the vinyl silane compound is one selected from the group consisting of vinyl trimethoxy silane, vinyl triethoxy silane, vinyl triacetoxy silane, trisbutanoxime vinyl silane, divinyl tetramethoxy disiloxane, and hexamethyl bisdimethylaminoxy cyclotetrasiloxane and mixtures thereof.

3. The resin of claim 1 obtainable from starting materials comprising:
a) 1.0 % wt. to 9.0 % wt. of silicone-containing compounds in the first polysiloxane group;
b) 0.24 % wt. to 4.8 % wt. of silicone-containing compounds in the second polysiloxane group;
c) 0.01 % wt. to 1.0 % wt. of the vinyl silane compound; and
d) the remainder being the polyolefin.

4. The resin of claim 3 further comprising:
a) 1 to 400 parts per million of an organic peroxide grafting agent,
b) 1 to 500 parts per million of an organo-metallic moisture curing agent, and
c) 0.01 % wt. to 2.5 % wt. of an ultra-high molecular weight silicone polymer with a number average molecular weight range from 350,000 to 1 million.

5. The resin of claim 1, wherein the vinyl silane is present in an amount sufficient that only a portion of the vinyl silane is grafted to the polyolefin leaving some free vinyl silane after grafting.

6. A silicone-containing film comprising the resin of anyone of claims 1 to 5.

7. A silicone-containing film comprising the resin of claim 1, wherein the first polysiloxane is the branched diorganopolysiloxane, and the silicone-containing film is a release film in combination with a mild adhesive.

8. A process for making a silicone-containing resin comprising the steps of:
a) making a first component by admixing in a first extruder a composition comprising:
i) a first polysiloxane selected from a first group consisting of:
a branched diorganopolysiloxane of the general formula: 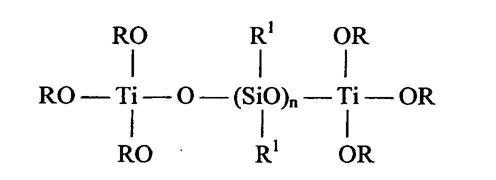
where R is methyl, ethyl, isopropyl, butyl or mixtures thereof and R¹ is a hydrocarbon radical containing 1 to 30 carbon atoms, and
ii) a polyolefin in molten state selected from (i) an unfunctionalized polyolefin homopolymer or copolymer of unsaturated hydrocarbons having 2-20 carbon atoms or mixtures thereof or from (ii) a functionalized polyolefin selected from a direct copolymer of ethylene and a polar monomer wherein the polar monomer is selected from the group consisting of vinyl silane, α,β-ethylenically-unsaturated C₃-C₈ carboxylic acids or ester thereof, and ethylenically unsaturated ester of a carboxylic acid or from (iii) an ionomeric copolymer or blends thereof selected from the group consisting of partially metal ion-neutralized direct copolymers of ethylene with acid containing monomers or from (iv) a polyolefin/graft monomer copolymer or blends of polyolefin/graft monomer copolymers, wherein the polyolefin is selected from the group consisting of polyethylene, polypropylene, ethylene propylene diene terpolymer and copolymers of ethylene with vinyl acetate, carbon monoxide, or ethylenically unsaturated carboxylic acids or esters thereof, and the graft monomers are selected from the group consisting of acrylic acid, methacrylic acid, maleic acid, fumaric acid, itaconic acid, crotonic acid, 5-norbornene-2,3-dicarboxylic acid, maleic anhydride, monosodium maleate, disodium maleate, itaconic anhydride, citraconic anhydride, monomethyl fumarate and monomethyl maleate, vinyl pyridines, vinyl silanes, 4-vinyl pyridine, vinyltriethoxysilane, hydroxy ethyl methacrylate, styrene and glycidyl methacrylate; or mixture of (i), (ii), (iii) or (iv), and
b) making a second component by admixing in a second extruder a composition comprising:
i) a polyolefin in molten state selected from (i) an unfunctionalized polyolefin homopolymer or copolymer of unsaturated hydrocarbons having 2-20 carbon atoms or mixtures thereof or from (ii) a functionalized polyolefin selected from a direct copolymer of ethylene and a polar monomer wherein the polar monomer is selected from the group consisting of vinyl silane, α,β-ethylenically-unsaturated C₃-C₈ carboxylic acids or ester thereof, and ethylenically unsaturated ester of a carboxylic acid or from (iii) an ionomeric copolymer or blends thereof selected from the group consisting of partially metal ion-neutralized direct copolymers of ethylene with acid containing monomers or from (iv) a polyolefin/graft monomer copolymer or blends of polyolefin/graft monomer copolymers, wherein the polyolefin is selected from the group consisting of polyethylene, polypropylene, ethylene propylene diene terpolymer and copolymers of ethylene with vinyl acetate, carbon monoxide, or ethylenically unsaturated carboxylic acids or esters thereof, and the graft monomers are selected from the group consisting of acrylic acid, methacrylic acid, maleic acid, fumaric acid, itaconic acid, crotonic acid, 5-norbornene-2,3-dicarboxylic acid, maleic anhydride, monosodium maleate, disodium maleate, itaconic anhydride, citraconic anhydride, monomethyl fumarate and monomethyl maleate, vinyl pyridines, vinyl silanes, 4-vinyl pyridine, vinyltriethoxysilane, hydroxy ethyl methacrylate, styrene and glycidyl methacrylate; or mixture of (i), (ii), (iii) or (iv), and
ii) a second polysiloxane selected from the group consisting of:
1) a dimethyl polysiloxane having functional end-groups selected from hydroxyl, amine, epoxy and methoxy groups,
2) the branched diorganopolysiloxane, and
3) mixtures thereof, and
iii) a vinyl silane compound, and
c) blending the first and second components together.

9. The process of claim 8 wherein the composition admixed in step b) further comprises:
a) an organic peroxide grafting agent to graft a portion of the vinyl silane onto the polyolefin, and
b) an organo-metallic moisture curing agent.

## Patentansprüche

1. Silikon-enthaltendes Harz, das durch Beimischung von Ausgangsmaterialien erhältlich ist, umfassend:
a) ein erstes Polysiloxan bestehend aus:
einem verzweigten Diorganopolysiloxan der allgemeinen Formel: 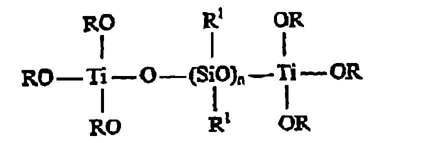
worin R Methyl, Ethyl, Isopropyl, Butyl oder Gemische davon darstellt und R¹ ein Kohlenwassertoffradikal mit 1 bis 30 Kohlenstoffatom(en) darstellt, und
b) ein Polyolefin, das ausgewählt ist aus: (i) einem nicht funktionalisierten Polyolefin-Homopolymer oder -Copolymer aus ungesättigten Koblenwasserstoffen mit 2-20 Kohlenstoffatomen oder Gemischen davon oder aus: (ii) einem funktionalisierten Polyolefin, das aus einem direkten Copolymer von Ethylen und einem polaren Monomer ausgewählt ist, worin das polare Monomer aus der Gruppe ausgewählt ist, bestehend ans Vinylsilan, α,β-ethylenisch ungesättigen C₃-C₈-Carbonsäuren oder Estern davon, und einem ethylenisch ungesättigten Ester einer Carbonsäure oder aus: (iii) einem ionomeren Copolymer oder Mischungen davon, die aus der Gruppe ausgewählt sind, bestehend aus teilweise Metallionen-neutralisierten direkten Copolymeren von Ethylen mit Säure enthaltenden Monomeren oder aus (iv) einem Polyolefin/Pfropfmonomer-Copolymer oder Mischungen aus Polyolefin/Pfropfmonomer-Copolymeren, worin das Polyolefin aus der Gruppe ausgewählt ist, bestehend aus Polyethylen, Polypropylen, Ethylen-Propylen-Dien-Terpolymer und Copolymeren von Ethylen mit Vinylacetat, Kohlenmonoxid oder ethylenisch ungesättigten Carbonsäuren oder Estern davon, und die Pfropfmonomere aus der Gruppe ausgewählt sind, bestehend aus Acrylsäure, Methacrylsäure, Maleinsäure, Fumarsäure, ltaconsäure, Crotonsäure. 5-Norbornen-2,3-dicarbonsäure, maleinsäureanhydrid, Mononatriummaleat, Dinatriummaleat, Itaconsäureanhydrid, Citraconsäureanhydrid, Monomethylfmnarat und Monomethylmaleat, Vinylpyridinen, Vinylsilanen, 4-Vinylpyridin, Vinyltriethoxysilan, Hydroxyethylmethacrylat, Styren und Glycidylmethacrylat; oder Gemische von (i), (ii), (iii) oder (iv), und
c) ein zweites Polysiloxan, das aus der Gruppe ausgewählt ist, bestehend aus:
i) einem Dimethylpolysiloxan mit funktionellen Endgruppen, die aus Hydroxyl-, Amin-, Epoxy- und Methoxy-Grugpen ausgewählt sind,
ii) dem verzweigten Diorganopolysiloxan, und
iii) Gemischen davon, und
d) eine Vinylsilan-Verbindung.

2. Harz nach Anspruch 1, worin:
a) das Dimethylpolysiloxan die Formel 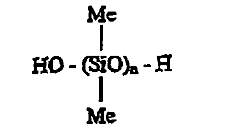 aufweist, worin Me = Methyl und n den Bereich von 200 bis 2 300 darstellt, und
b) die Vinylsilan-Verbindung eine darstellt, die aus der Gruppe ausgewählt ist, bestehend aus Vinyltrimethoxysilan, Vinyltriethoxysilan, Vinyltriacetoxysilan, Tributanoxim- Vinylsilan, Divinyltetramethoxydisiloxan und Hexamethylbisdimethylaminoxy-cyclotetrasiloxan und Gemischen davon.

3. Harz nach Anspruch 1, das aus den Ausgangsmaterialien erhältlich ist, umfassend:
a) 1,0 Gew.-% bis 9,0 Gew.-% Silikon-enthaltende Verbindungen in der ersten Polysiloxangruppe;
b) 0,24 Gew.-% bis 4,8 Gew.-% Silikon-enthaltende Verbindungen in der zweiten Polysiloxangruppe;
c) 0,01 Gew.-% bis 1,0 Gew.-% der Vinylsilan- Verbindung; und
d) wobei der Rest Polyolefin darstellt.

4. Harz nach Anspruch 3, weiter umfassend:
a) 1 bis 400 Teile auf eine Million eines organischen Peroxid-Pfropfmittels,
b) 1 bis 500 Teile auf eine Million eines organometallischen Feuchtigkeitsabbindemittels und
c) 0,01 Gew.-% bis 2,5 Gew: % eines Silikonpolymers mit ultrahohem Molekulargewicht mit einem Zahlenmittel des Molekulargewichtsbereichs von 350 000 bis 1 Million.

5. Harz nach Anspruch 1, worin das Vinylsilan in einer Menge vorliegt, die ausreichend ist, damit nur ein Anteil des Vinylsilans auf das Polyolefin aufgepfropft wird, wobei nach dem Aufpfropfen etwas freies Vinylsilan zurückbleibt.

6. Silikon-enthaltender Film, umfassend das Harz nach einem der Ansprüche 1 bis 5.

7. Silikon-enthaltender Film, umfassend das Harz nach Anspruch 1, worin das erste Polysiloxan das verzweigte Diorganopolysiloxan darstellt und der Silikon-enthaltende Film einen Trennfilm in Kombination mit einem milden Klebstoff darstellt.

8. Verfahren zur Herstellung eines Silikon-enthaltenden Harzes, umfassend die folgenden Schritte:
a) Herstellung einer ersten Komponente durch Beimischen in einen ersten Extruder einer Zusammensetzung die Folgendes umfasst:
i) ein erstes Polysiloxan, das aus einer ersten Gruppe ausgewählt ist, bestehend aus:
einem verzweigten Diorganopolysiloxan der allgemeinen Formel: 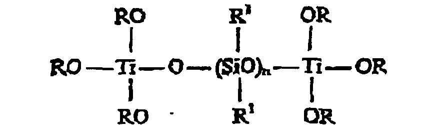
worin R Methyl, Ethyl, Isopropyl, Butyl oder Gemische davon darstellt und R¹ ein Kohlenwasserstoffradikal mit 1 bis 30 Kohlenstoffatom(en) darstellt, und
ii) ein Polyolefin in geschmolzenem Zustand, das ausgewählt ist aus: (i) einem nicht funktionalisierten Polyolefin-Homopolymer oder Copolymer aus ungesättigten Kohlenwasserstoffen mit 2-20 Kohlenstoffatomen oder Gemischen davon oder aus: (ii) einem funktionalisierten Polyolefin, das aus einem direkten Copolymer von Ethylen und einem polaren Monomer ausgewählt ist, worin das polare Monomer aus der Gruppe ausgewählt ist, bestehend aus vinylsilan, α,β-ethylenisch ungesättigten C₃-C₈-Carbonsäuren oder Estern davon, und einem ethylenisch ungesättigten Ester einer Carbonsäure oder aus: (iii) einem ionomeren Copolymer oder Mischungen davon, die aus der Gruppe ausgewählt sind, bestehend aus teilweise Metallionen-neutralisierten direkten Copolymeren von Ethylen mit Säure enthaltenden Monomeren oder aus (iv) einem Polyolefin/Pfropfmonomer-Copolymer oder Mischungen aus Polyolefin/Pfropfmonomer-Copolymeren, worin das Polyolefin aus der Gruppe ausgewählt ist, bestehend aus Polyethylen, Polypropylen, Ethylen-Propylen-Dien-Terpolymer und Copolymeren von Ethylen mit Vinylacetat, Kohlenmonoxid oder ethylenisch ungesättigten Carbonsäuren oder Estern davon, und die Pfropfmonomere aus der Gruppe ausgewählt sind, bestehend aus Acrylsäure, Methacrylsäure, Maleinsäure, Fumarsäure, Itaconsäure, Crotonsäure, 5-Norbornen-2,3-dicarbonsäure, Maleinsäureanhydrid, Mononatriummaleat, Dinatriummaleat, Itaconsäureanhydrid, Citraconsäureanhydrid, Monomethylfumarat und Monomethylmaleat, Vinylpyridinen, Vinylsilanen, 4-Vinylpyridin, Vinyltriethoxysilan, Hydroxyethylmethacrylat, Styren und Glycidylmethacrylat; oder Gemische von (i), (ii), (iii) oder (iv), und
b) Herstellung einer zweiten Komponente durch Beimischen in einen zweiten Extruder einer Zusammensetzung, umfassend:
i) ein Polyolefin in geschmolzenem Zustand, das ausgewählt ist aus: (i) einem nicht funktionalisierten Polyolefin-Homopolymer oder -Copolymer aus ungesättigten Kohlenwasserstoffen mit 2-20 Kohlenstoffatomen oder Gemischen davon oder aus: (ii) einem funktionalisierten Polyolefin, das aus einem direkten Copolymer von Ethylen und einem polaren Monomer ausgewählt ist, worin das polare Monomer aus der Gruppe ausgewählt ist, bestehend aus Vinylsilan, α,β-ethylenisch ungesättigten C₃-C₈-Carbonsäuren oder Estern davon, und einem ethylenisch ungesättigten Ester einer Carbonsäure oder aus: (iii) einem ionomeren Copolymer oder Mischungen davon, die aus der Gruppe ausgewählt sind, bestehend aus teilweise Metallionen-neutralisierten direkten Copolymeren von Ethylen mit Säure enthaltenden Monomeren oder aus: (iv) einem Polyolefin/Pfropfmonomer-Copolymer oder Mischungen aus Polyolefin/Pfropfmonomer-Copolymeren, worin das Polyolefin aus der Gruppe ausgewählt ist, bestehend aus Polyethylen, Polypropylen, Ethylen-Propylen-Dien-Terpolymer und Copolymeren von Ethylen mit Vinylacetat, Kohlenmonoxid oder ethylenisch ungesättigten Carbonsäuren oder Estern davon, und die Pfropfmonomere aus der Gruppe ausgewählt sind, bestehend aus Acrylsäure, Methacrylsäure, Maleinsäure, Fumarsäure, Itaconsäure, Crotonsäure, 5-Norbornen-2,3-dicarbonsäure, Maleinsäureanhydrid, Mononatriummaleat, Dinatriummaleat, Itaconsäureanhydrid, Citraconsäureanhydrid, Monomethylfumarat und Monomethylmaleat, Vinylpyridinen, Vinylsilanen, 4-Vinylpyridin, Vinyltriethoxysilan, Hydroxyethylmethacrylat, Styren und Glycidylmethacrylat; oder Gemische von (i), (ii), (iii) oder (iv), und
ii) ein zweites Polysiloxan, das aus der Gruppe ausgewählt ist, bestehend aus:
1) einem Dimethylpolysiloxan mit funktionellen Endgruppen, die aus Hydroxyl-, Amin-, Epoxy- und Methoxy-Gruppen ausgewählt sind,
2) dem verzweigten Diorganopolysiloxan, und
3) Gemischen davon, und
iii) eine Vinylsilan-Verbindung und
c) Zusammenmischung der ersten und zweiten Komponenten.

9. Verfahren nach Anspruch 8, worin die in Schritt b) beigemischte Zusammensetzung weiter Folgendes umfasst:
a) ein organisches Peroxid-Pfropfmittel zum Aufpfropfen eines Anteils des Vinylsilans und des Polyolefins, und
b) ein organometallisches Feuchtigkeitsabbindemittel.

## Revendications

1. Résine contenant de la silicone, susceptible d'être obtenue en mélangeant des matières de départ comprenant :
a) un premier polysiloxane consistant en:
un diorganopolysiloxane ramifié de formule générale: 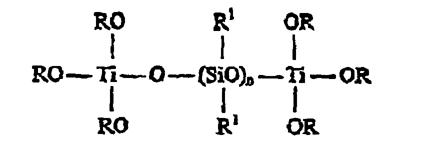
où R est méthyle, éthyle, isopropyle, butyle ou des mélanges de ceux-ci et R¹ est un radical hydrocarboné contenant 1 à 30 atomes de carbone, et
b) une polyoléfine choisie parmi (i) un homopolymère ou copolymère polyoléfinique non fonctionnalisé d'hydrocarbures insaturés ayant 2 à 20 atomes de carbone ou des mélanges de ceux-ci ou (ii) une polyoléfine fonctionnalisée choisie parmi un copolymère direct d'éthylène et d'un monomère polaire, dans lequel le monomère polaire est choisi dans le groupe constitué par le vinyl silane, les acides carboxyliques en C₃ à C₈ α,β-éthyléniquement insaturés ou un ester de ceux-ci, et un ester éthyléniquement insaturé d'un acide carboxylique ou (iii) un copolymère ionomère ou des mélanges de celui-ci, choisi dans le groupe constitué par les copolymères directs, partiellement neutralisés avec des ions métalliques, d'éthylène avec des monomères contenant un acide on (iv) un copolymère polyoléfine/monomère greffé ou des mélanges de copolymères polyoléfine/monomère greffe, où la polyoléfine est choisie dans le groupe constitué par un polyéthylène, un polypropylène, un terpolymère éthylène propylène diène et les copolymères d'éthylène avec de l'acétate de vinyle, le monoxyde de carbone, ou les acides carboxyliques éthyléniquement insaturés ou les esters de ceux-ci, et les monomères greffés sont choisis dans le groupe constitué par l'acide acrylique, l'acide méthacrylique, l'acide maléique, l'acide fumarique, l'acide itaconique, l'acide crotonique, l'acide 5-norbornère-2,3-dicarboxylique, l'anhydride maléique, le maléate monosodique, le maléate disodique, l'anhydride itaconique, l'anhydride citraconique, le fumarate de monométhyle et le maléate de monométhyle, les vinyl pyridines, les vinyl silanes, la 4-vinyl pyridine, le vinyltriéthoxysilane, le méthacrylate d'hydroxyéthyle, le styrène et le méthacrylate de glycidyle; ou un mélange de (i), (ii) (iii) ou (iv), et
c) un second polysiloxane choisi dans le groupe constitué par:
i) un dimethylpolysiloxane ayant des groupes terminaux fonctionnels choisis parmi les groupes hydroxyle, aminés, époxy et méthoxy,
ii) le diorganopolysiloxane ramifié, et
iii) des mélanges de ceux-ci, et
d) un composé de vinylsilane.

2. Résine selon la revendication 1, dans laquelle:
a) le diméthylpolysiloxane a la formule, 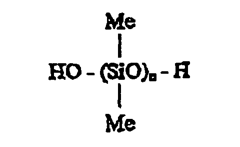 où Me = méthyle et n est dans la gamme de 200 à 2300, et
b) le composé de vinyl silane est choisi dans le groupe constitué par le vinyl triméthoxy silane, le vinyl triéthoxy silane, le vinyl triacétoxy silane, le tributanoxime vinyl silane, le divinyl tétraméthoxy disiloxane et l'hexaméthyl bisdiméthylaminoxy cyclotétrasiloxane et des mélanges de ceux-ci.

3. Résine selon la revendication 1, susceptible d'être obtenue à partir de matières de départ comprenant:
a) 1,0% en poids à 9,0% en poids de composés contenant de la silicone dans le premier groupe polysiloxane;
b) 0,24% en poids à 4,8% en poids de composés contenant de la silicone dans le second groupe polysiloxane;
c) 0,01% en poids à 1,0% en poids du composé de vinylsilane; et
d) le reste étant la polyoléfine.

4. Résine selon la revendication 3, comprenant en outre:
a) 1 à 400 parties par million d'un agent greffant de type peroxyde organique;
b) 1 à 500 parties par million d'un agent de durcissement par l'humidité organo-métallique, et
c) 0,01% en poids à 2,5% en poids d'un polymère de silicone de poids moléculaire ultra-élevé ayant une gamme de poids moléculaire moyen en nombre de 350000 à 1 million.

5. Résine selon la revendication 1, dans laquelle le vinyl silane est présent en une quantité suffisante pour que seulement une partie du vinyl silane soit greffé sur la polyoléfine en laissant un peu de vinyl silane libre après le greffage.

6. Film contenant de la silicone, comprenant la résine selon l'une quelconque des revendications 1 à 5.

7. Film contenant de la silicone, comprenant la résine de la revendication 1, dans lequel le premier polysiloxane est le diorganopolysiloxane ramifié, et le film contenant de la silicone est un film détachable combiné avec un adhésif léger.

8. Procédé pour fabriquer une résine contenant de la silicone, comprenant les étapes consistant:
a) à préparer un premier constituant en mélangeant dans une première extrudeuse une composition comprenant:
i) un premier polysiloxane choisi dans un premier groupe constitué par:
un diorganopolysiloxane ramifié de formule générale: 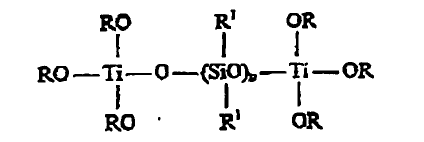
où R est méthyle, éthyle, isopropyle, butyle ou des mélanges de ceux-ci et R¹ est un radical hydrocarboné contenant 1 à 30 atomes de carbone, et
ii) une polyoléfine à l'état fondu choisie parmi (i) un homopolymère ou copolymère polyoléfinique non fonctionnalisé d'hydrocarbures insaturés ayant 2 à 20 atomes de carbone ou des mélanges de ceux-ci ou (ii) une polyoléfine fonctionnalisée choisie parmi un copolymère direct d'éthylène et d'un monomère polaire, dans lequel le monomère polaire est choisi dans le groupe constitué par le vinyl silane, les acides carboxyliques en C₃ à C₈ α,β-éthyléniquement insaturés on un ester de ceux-ci, et un ester éthyléniquement insaturé d'un acide carboxylique ou (iii) un copolymère ionomère ou des mélanges de celui-ci, choisi dans le groupe constitué par les copolymères directs, partiellement neutralisés avec des ions métalliques, d'éthylène avec des monomères contenant un acide ou (iv) un copolymère polyoléfine/monomère greffé ou des mélanges de copolymères polyoléfine/monomère greffé, où la polyoléfine est choisie dans le groupe constitué par un polyéthylène, un polypropyléne, un terpolymère éthylène propylène diène et les copolymères d'éthylène avec de l'acétate de vinyle, le monoxyde de carbone, ou les acides carboxyliques éthyléniquement insaturés ou les esters de ceux-ci, et les monomères greffés sont choisis dans le groupe constitué par l'acide acrylique, l'acide méthacrylique, l'acide maléique, l'acide fumarique, l'acide itaconique, l'acide crotonique, l'acide 5-norbornène-2,3-dicarboxylique, l'anhydride maléique, le maléate monosodique, le maléate disodique, l'anhydride itaconique, l'anhydride citraconique, le fumarate de monométhyle et le maléate de monométhyle, les vinyl pyridines, les vinyl silanes, la 4-vinyl pyridine, le vinyltriéthoxysilane, le méthacrylate d'hydroxyéthyle, le styrène et le méthacrylate de glycidyle; ou un mélange de (i), (ii) (iii) ou (iv), et
b) à préparer un second constituant en mélangeant dans une seconde extrudeuse une composition comprenant:
i) une polyoléfine à l'état fondu choisie parmi (i) un homopolymère ou copolymère polyoléfinique non fonctionnalisé d'hydrocarbures insaturés ayant 2 à 20 atomes de carbone ou des mélanges de ceux-ci ou (ii) une polyoléfine fonctionnalisée choisie parmi un copolymère direct d'éthylène et d'un monomère polaire, dans lequel le monomère polaire est choisi dans le groupe constitué par le vinyl silane, les acides carboxyliques en C₃ à C₈ α,β-éthyléniquement insaturés ou un ester de ceux-ci, et un ester éthyléniquement insaturé d'un acide carboxylique ou (iii) un copolymère ionomère ou des mélanges de celui-ci, choisi dans le groupe constitué par les copolymères directs, partiellement neutralisés avec des ions métalliques, d'éthylène avec des monomères contenant un acide ou (iv) un copolymère polyoléfine/monomère greffé ou des mélanges de copolymères polyoléfine/monomère greffé, où la polyoléfine est choisie dans le groupe constitué par un polyéthylène, un polypropylène, un terpolymère éthylène propylène diène et les copolymères d'éthylène avec de l'acétate de vinyle, le monoxyde de carbone, ou les acides carboxyliques éthyléniquement insaturés ou les esters de ceux-ci, et les monomères greffés sont choisis dans le groupe constitué par l'acide acrylique, l'acide méthacrylique, l'acide maléique, l'acide fumarique, l'acide itaconique, l'acide crotonique, l'acide 5-norbornène-2,3-dicarboxylique, l'anhydride maléique, le maléate monosodique, le maléate disodique, l'anhydride itaconique, l'anhydride citraconique, le fumarate de monométhyle et le maléate de monométhyle, les vinyl pyridines, les vinyl silanes, la 4-vinyl pyridine, le vinyltriéthoxysilane, le méthacrylate d'hydroxyéthyle, le styrène et le méthacrylate de glycidyle; ou un mélange de (i), (ii) (iii) ou (iv), et
ii) un second polysiloxane choisi dans le groupe constitué par:
1) un diméthylpolysiloxane ayant des groupes terminaux fonctionnels choisis parmi les groupes hydroxyle, aminés, époxy et méthoxy,
2) le diorganopolysiloxane ramifié, et
3) des mélanges de ceux-ci, et
iii) un composé de vinylsilane, et
c) à mélanger les premier et second constituants ensemble.

9. Procédé selon la revendication 8, dans lequel la composition mélangée dans l'étape b) comprend en outre:
a) un agent greffant de type peroxyde organique pour greffer une partie du vinyl silane sur la polyoléfine, et
b) un agent de durcissement par l'humidité organo-métallique.
